# EUROPEAN PATENT APPLICATION

(11) **EP 2 614 933 A1**
(43) Date of publication of application: **17.07.2013**
(21) Application number: 13151225.3
(22) Date of filing: 14.01.2013
(51) Int. Cl.: B25J 9/00

(54) **Fast pick-and-place parallel robot with compact travelling plate**

(30) Priority: 13.01.2012 NL 2008119
(71) Applicant: Penta Robotics Patents B.V., 3633 XX Vreeland (NL)
(72) Inventor: The designation of the inventor has not yet been filed
(74) Representative: Verhees, Godefridus Josephus Maria

(57) **Abstract**

The current invention is about a parallel robot for pick-and-place applications. This robot is made of four kinematics chains acting in parallel on an articulated traveling plate (2), and has 4 degrees of freedom (Tx, Ty, Tz and Rz, where z represents the vertical axis). Each chain is the serial arrangement of an actuator (3i), a solid element called "arm" (5i), and an articulated element called "parallelogram" (9i). Each parallelogram is made of a pair of bars (6i1, 6i2) and a pair of spacers (8i1, 8i2) connected using spherical joint. Each kinematic chain connects the frame to the traveling plate. The traveling plate is made of two main parts (21, 22) guided in translation relatively along z, each part being connected to two kinematic chains. A motion transformation device (23, 24) transforms the relative distance between the two parts into the rotation of a third component, namely the end-effector (4).

## Description

### Field of the Invention

The invention relates to arobot for pick-and-place applications comprising:
- a frame,
- four actuators connected to the frame,
- four arms each with a first end connected to one of the actuators,
- four kinematic chains each connected to the other second end of the arms, and
- two main parts, each connected to two of the kinematic chains, which main parts are present one on top of the other and are connected to each other via a motion transformation system that transforms the relative distance between the top and the lower part into the rotation of an end-effector connected to the motion transformation system.

### State of the art

Such a robot is known from the publication "Heli4: A Parallel Robot for Scara Motions with a Very Compact Traveling Plate and a Symmetrical Design" van Sébastien Krut, Olivier Company, Vincent Nabat en François Pierrot. This known robot is made of four kinematics chains acting in parallel on an articulated traveling plate, and has four degrees of freedom (dof) Tx, Ty, Tz and Rz, where z represents the vertical axis. Each chain is the serial arrangement of an actuator, a solid element (called "arm"), and an articulated element (called "parallelogram"). Each parallelogram element behaves as such (it remains planar). It is made of a pair of bars and a pair of spacers (elements of the adjacent arm and the traveling plate) connected using spherical joint (preferably). Each kinematic chain connects the frame to the traveling plate.

The traveling plate is made of two main parts, each part being connected to two kinematic chains. A motion transformation device transforms the relative distance between the two parts into the rotation of a third component, namely the end-effector. This arrangement results in a compact traveling plate. It also makes the robot over-constrained, thus improving rigidity.

### Summary of the Invention

It is an object of the invention to improve the known robot. To this end the robot according to the invention is **characterized in that** the main parts are connected to each other via a guiding device. Because of this the external forces on the end-effector are passed to the actuators via the kinematic chains in a more effective way.

Preferably, the guiding device comprises at least two parallel guiding rods fixed to one of the main parts and which are moveable through openings in the other main part.

An emboddiment of the robot according to the invention is **characterized in that** the actuators are present at two different levels, two of the actuators connected to the upper main part being on an upper level and the other two actuators connected to the lower main part being at a lower level, wherein the actuators at the upper level are straight above the actuators at the lower level. In this way a compact construction has been achieved.

The kinematic chains preferably each consist of a parallellogram constructed by four elements of which a first element is connected to one of the arms and a second element opposite of the first element is connected to one of the main parts.

Preferably the first element of each parallellogram is part of the second end of the arm connected to the first element and the second element is part of the main part connected to it.

Further, the motion transformation system preferably comprises a screw provided with outer screw threads which is rotatable and connected to one of the main parts as well as a nut provided with inner screw thread in a opening in the other main part through which the screw is movable.

### Brief description of the drawings

The invention will be further elucidated with reference to exemplary embodiments shown in the drawings of the robot according to the invention. In the drawings:
Figure 1 shows a first embodiment of the robot according to the invention,
Figure 2 shows a kinematic chain of the robot of figure 1,
Figure 3 shows the main parts with the motion transformation system of the robot of figure 1,
Figure 4 shows a second embodiment of the robot according to the invention, and
Figure 5 shows the main parts with the motion transformation system of the robot of figure 4.

### Detailed description of the drawings

The current invention is about a novel parallel robot kinematics for pick-and-place applications. Pick-and-place robots are industrial handling robots with 4 degrees of freedom (dof) Tx, Ty, Tz and Rz (where z represents the vertical axis) capable of grasping, moving, tilting around z and releasing objects. Their main field of application is about agro-alimentary. The need for speed guided engineers and researchers to design specific robots architectures known as "parallel", capable of high accelerations, high speed, consequently decreasing the cycle duration. Indeed, these architectures allow placing the actuators remotely on the base and decrease consequently the weight of moving elements.

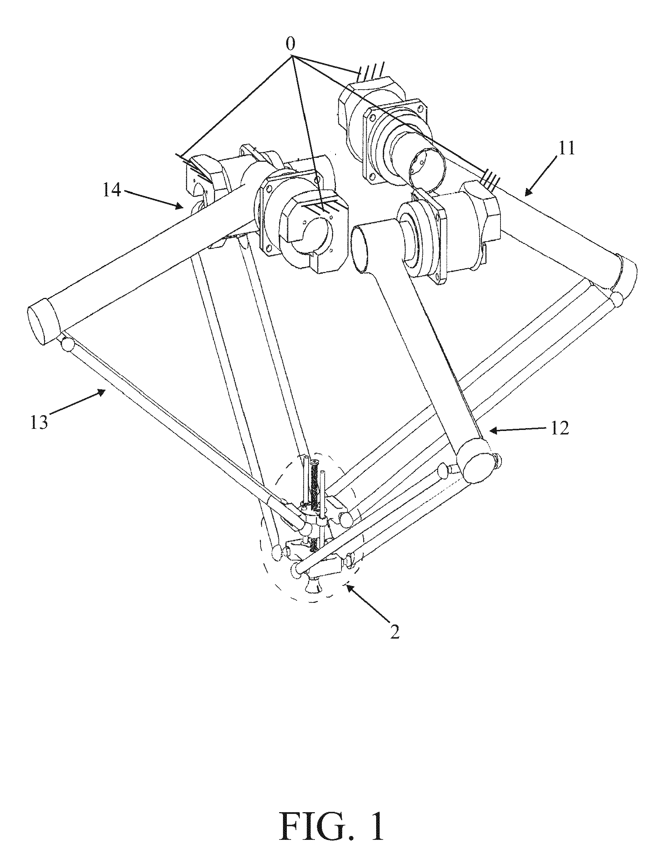

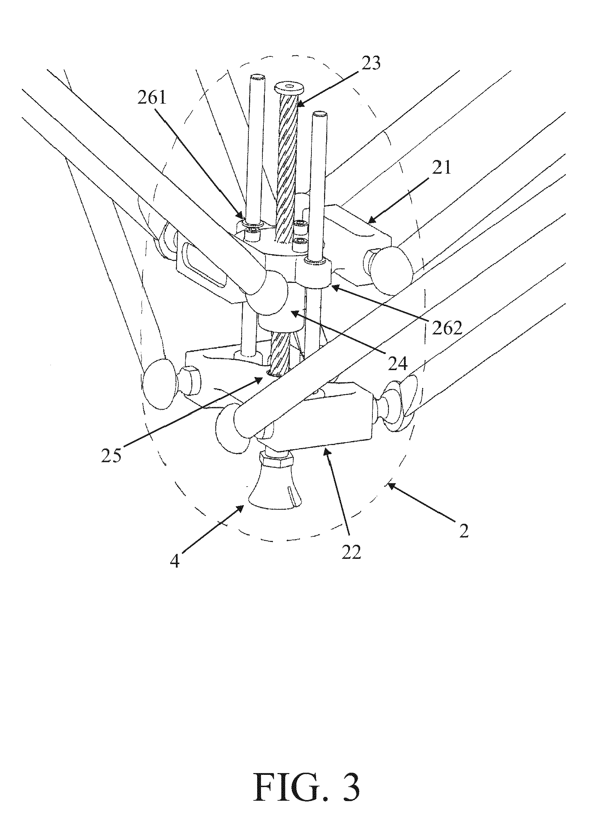

The current invention belongs to the family of robots having four identical kinematic chains 11, 12, 13, 14 (see Fig.1) arranged in a parallel manner from the base frame 0 to an articulated mobile platform (aka articulated traveling plate) 2 (Fig. 1 and 3). Every kinematic chain 1i (i=1, 2, 3, 4) is made of an actuator 3i, the stator 3i1 of which being connected to the frame 0, the rotor 3i2 of which being connected to a rigid arm 5i which is connected to a pair of bars 6i1 and 6i2, these bars 6i1 and 6i2 being connected at their other end to the traveling plate 2. The actuators 3i can be equally rotational or translational actuators. Rotational actuators that lead to more compact robot architectures are preferred. The joints between the bars and the articulated traveling plate on one side, and the bars and the actuated arms on the other side are spherical joints 7 (though universal joints can be chosen for one end or even both ends). The bars 6i1 and 6i2 of a same pair i are of same length. So is it for the elements of the arms 8i1 and the traveling plate 8i2 spacing the bars of a pair. These elements will be called "spacers" 8i1 and 8i2. The set made of a pair of bars 6i1 and 6i2 and a pair of spacers 8i1 and 8i2 of a kinematic chain 1i is called a "parallelogram" 9i and behaves as so. This means that the bars 6i1 and 6i2 of a pair i remain parallel during motion. So is it for the spacers 8i1 and 8i2 of a pair i. A necessary condition for this in the case of rotational actuators is that both, the rotational axis of the rotor 3i2 relatively to the stator 3i1 of an actuator 3i, and the one of the spacer 8i1 connected to the adjacent arm 5i, are parallel, for all the arms (i=1, 2, 3, 4). This property cannot be foreseen when considering each kinematic chain 1i individually (because each parallelogram 9i is free to twist) but when considering the robot in its totality, as it couples the kinematic chains together and constrain the parallelograms to remain planar. Consequently the role that plays the kinematics of the traveling plate 2 on the overall robot architecture is of prime importance. Compact and being able to share the external loads applied on the traveling plate 2 equally among all the bars 6i1 and 6i2, as well as among all the actuators 3i, the traveling plate 2 is the key element of the current invention.

The traveling plate 2 is inventive as it is made of two main parts 21 and 22 guided relatively to move in translation along z, one 21 on top of the other 22. One part is linked to two of the kinematic chains 1i, the other to the two others. Several ways to implement the translational guidance are feasible. Either using a prismatic joint (or a few placed parallel); either using two (or more) cylindrical joints placed parallel; either based on Sarrus linkage; or a redundant Sarrus linkage with more than two branches (this list is not exhaustive).

A motion transformation system that transforms the relative distance between the top and the lower main part, into the rotation around z of a third element, called the end-effector 4, is added to the system. This system may have several embodiments such as a classical nut and screw system (but with high pitch for back-drivability); a system with a tie-rod that works sideways; a system with a rack and pinion and a cross-axis transfer gearbox; a system made with pulleys and cables; or a system with hydraulic cylinders with connected chambers (this list is not exhaustive).

The preferred embodiment (depicted in Fig. 1 and Fig. 3) is that where kinematic chains 11 and 13 are connected to the upper traveling plate part 21, their spacers 811, 812, 831, 832 being aligned with x, the kinematic chains 12 and 14 are connected to the lower traveling plate part 22, their spacers 821, 822, 841, 842 being aligned along y, and where the traveling plate 2 is perfectly symmetric relatively to the median planes x-z and y-z. The system of motion transformation consists in a screw 23 and a nut 24 centered and aligned with z. The nut 24 is connected to the traveling plate upper part 22 and the screw 23 is guided using a pivot joint relatively to the lower part 21 and connected to the end-effector 4. The translational guidance between the two main parts 21 and 22 of the traveling plate is realized using two cylindrical joints aligned with z being parallel and placed symmetrically relatively to the median plane y-z of the traveling plate 2. This specific embodiment results in a very compact traveling plate, which is of prime interest for pick-and-place as the potential for collisions of the traveling plate with the environment is reduced, especially when the robot needs to grasp objects located near the sides of a container.

The translational guidance of the traveling plate makes the robot over-constrained, increasing consequently its rigidity. It leads to an optimal repartition of the external forces acting on the travelling plate 2 among the bars 6i1 and 6i2, as well as among the actuators 3i. By optimal, we mean that the contribution of every bar 6i1 and 6i2 to resist against external load is almost identical, so is it for every actuator 3i. Such architecture allows spacing the actuators regularly around z and placing them in two parallel planes spaced along z, which allows bringing them closer to gain in compactness.

The traveling plate is innovative as it is made of two main parts guided in translation relatively along z, each part being connected to two kinematic chains. The translation guidance, combined with a specific arrangement for the robot, allows distributing optimally the end-effector external forces into the parallelogram elements, and the actuators as well. This architecture also allows positioning the actuators in two parallel planes spaced along z, which allows bringing them closer to improve compactness.

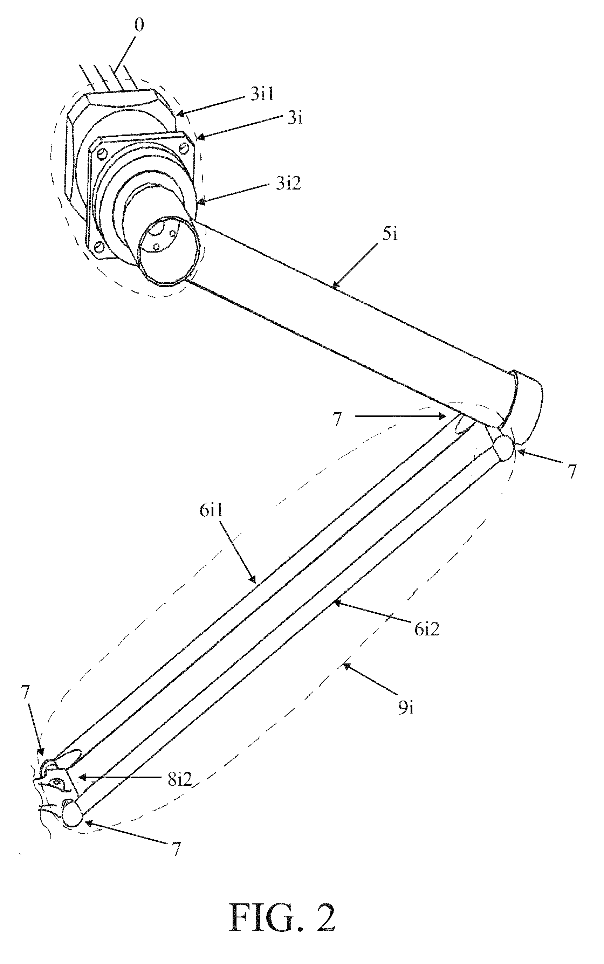

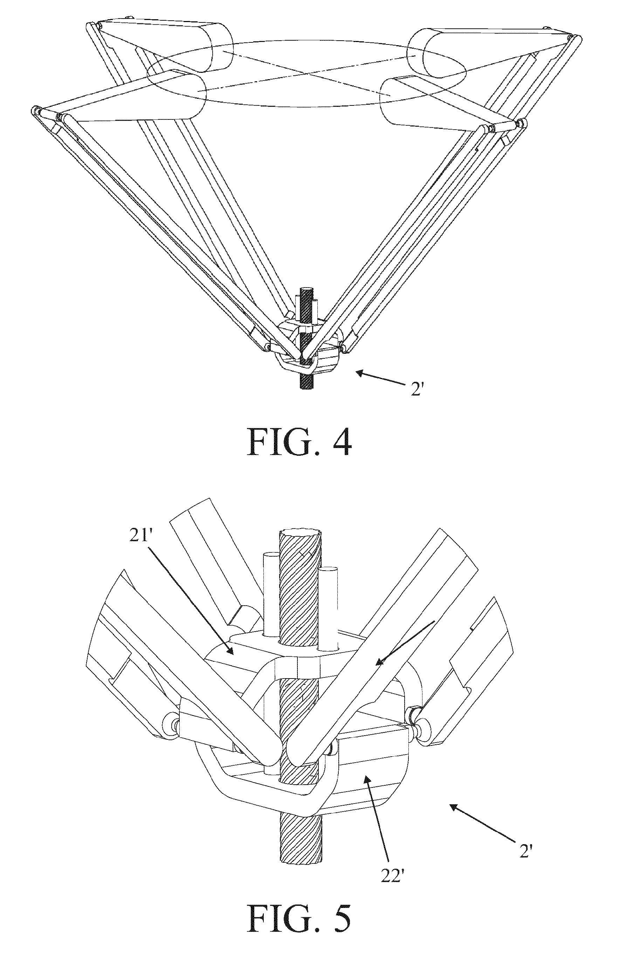

In Figure 4 a second embodiment of the robot according to the invention is shown. Figure 5 shows the main parts 21', 22' of the travelling plate 2' with the motion transformation system of the robot in detail. This embodiment differs from the first embodiment shown in Figures 1-3 in that the actuators are present at the same level in one plane and in that the second ends of the arms (the joints) are in one plane and at the same level instead of being in two different levels as is the case in the first embodiment.

Although in the foregoing the invention has been explained with reference to the drawings, it should be noted that the invention is in no way limited to the embodiment shown in the drawings. The invention also extends to embodiments different from the embodiment shown in the drawings and within the framework defined by the claims.

## Claims

1. A robot for pick-and-place applications comprising:
- a frame,
- four actuators connected to the frame,
- four arms each with a first end connected to one of the actuators,
- four kinematic chains each connected to the other second end of the arms, and
- two main parts, each connected to two of the kinematic chains, which main parts are present one on top of the other and are connected to each other via a motion transformation system that transforms the relative distance between the top and the lower part into the rotation of an end-effector connected to the motion transformation system,
**characterized in that** the main parts are connected to each other via a guiding device.

2. The robot according to claim 1, **characterized in that** the guiding device comprises at least two parallel guiding rods fixed to one of the main parts and which are moveable through openings in the other main part.

3. The robot according to claim 1 or 2, **characterized in that** the actuators are present at two different levels, two of the actuators connected to the upper main part being on an upper level and the other two actuators connected to the lower main part being at a lower level, wherein the actuators at the upper level are straight above the actuators at the lower level.

4. The robot according to claim 1, 2 or 3, **characterized in that** the kinematic chains each consist of a parallellogram constructed by four elements of which a first element is connected to one of the arms and a second element opposite of the first element is connected to one of the main parts.

5. The robot according to claim 4, **characterized in that** the first element of each parallellogram is part of the second end of the arm connected to the first element and the second element is part of the main part connected to it.

6. The robot according to one of the preceding claims, **characterized in that** the motion transformation system comprises a screw provided with outer screw threads which is rotatable and connected to one of the main parts as well as a nut provided with inner screw thread in a opening in the other main part through which the screw is movable.
